# FASCICULE DE BREVET EUROPEEN

(11) **EP 2 735 513 B1**
(45) Date de publication et mention de la délivrance du brevet: **01.04.2015**
(21) Numéro de dépôt: 13005267.3
(22) Date de dépôt: 08.11.2013
(51) Int. Cl.: B64D 37/08

(54) **Réservoir de stockage de carburant, aéronef et procédé**
Flugzeugtreibstofftank und Treibstoffslagerungsmethode
Aircrat fuel tank and fuel storing method

(30) Priorité: 26.11.2012 FR 1203186
(43) Date de publication de la demande: 28.05.2014
(73) Titulaire: Airbus Helicopters, 13725 Marignane Cedex (FR)
(72) Inventeur: Meillat, Roland, 13760 Saint Cannat (FR); Mougin, Stéphane, 13790 Rousset (FR); Brescon, Quitterie, 13100 AIX EN Provence (FR)
(74) Mandataire: GPI & Associés

(56) Documents cités:
- EP-A2- 2 135 805
- US-A- 2 654 553
- US-A- 2 703 607

## Description

La présente invention concerne un réservoir de stockage de carburant, un aéronef muni d'un tel réservoir ainsi qu'un procédé de commande d'un tel réservoir.

L'invention se situe donc dans le domaine technique des réservoirs, et plus particulièrement dans le domaine des réservoirs de carburant d'aéronef.

Classiquement, un aéronef est muni d'au moins un réservoir alimentant en carburant une installation motrice.

Une tuyauterie peut être agencée pour transférer le carburant à partir du réservoir vers un moteur, ou encore vers un autre réservoir par exemple.

Cette tuyauterie débouche dans le réservoir en une zone dénommée par commodité « zone d'alimentation ». La tuyauterie peut comprendre au moins un tuyau, voire au moins une pompe de gavage.

En fonction de la géométrie du réservoir et de la position de la zone d'alimentation, un volume de carburant peut ne pas atteindre la zone d'alimentation. Ce volume de carburant est parfois dénommé « volume non consommable » dans la mesure où ce volume de carburant ne peut pas être consommé par un moteur.

Afin de minimiser le volume non consommable dans les réservoirs, les constructeurs introduisent des surfaces en pente dans le fond des réservoirs pour diriger le carburant vers une conduite d'alimentation. De telles surfaces sont dénommées « pentes » par simplification. Les pentes peuvent être dirigées selon les sens longitudinal et transversal du véhicule.

Dans le cadre d'un aéronef, l'angle d'inclinaison des pentes peut dépendre des capacités de vol de l'aéronef, plus précisément de ses capacités d'inclinaison (assiettes) et d'accélérations/ décélérations angulaires autour de ses axes de tangage et de roulis. Quelle que soit la position de l'aéronef, les conduites d'alimentation doivent alimenter les moteurs de l'aéronef durant tout le vol.

Dès lors, les réservoirs peuvent être réalisés dans une matière souple. Une telle matière comprend par exemple un support en polyester et un mélange d'élastomères. Des mousses insérées dans le compartiment d'un réservoir permettent ainsi de réaliser des pentes sur lesquelles repose un réservoir souple.

Par exemple, les pentes peuvent varier entre 5° et 9° dans le sens longitudinal, et sont d'environ 3° dans le sens transversal.

Cependant, la mise en place des mousses et le choix des géométries en coins inférieurs de réservoirs engendrent une perte de volume de carburant embarquable non négligeable. De plus, les performances différentes entre chaque aéronef impliquent que la géométrie de chaque réservoir doit être étudiée en fonction de l'aéronef, empêchant tout type de standardisation.

Parmi l'arrière plan technologique, on connaît le document US5927651.

Ce document dévoile un dispositif de réservoir à carburant équipé d'une structure en élastomère déformable permettant de s'adapter aux formes d'un compartiment.

Le document FR2294913 dévoile un moyen expansible de stockage de carburant pouvant être dilaté et venir dans une position dans laquelle il se trouve au moins partiellement à l'extérieur d'une zone d'un avion dite « zone de surface ».

Le document US3409253 dévoile un système de réservoir rétractable pour aéronef formé de moyens rigides encadrant une surface flexible pour s'adapter à la quantité de carburant embarquée.

On connait aussi les documents EP 2135805, US 2703607 et US 2654553.

Le document EP 2135805 décrit un container muni d'une ouverture mettant en communication fluidique l'intérieur du container avec une atmosphère ambiante. De plus, le container abrite un dispositif à volume variable.

La présente invention a alors pour objet de proposer un réservoir visant à s'affranchir de la limitation du volume de carburant embarquable provoquée par l'implémentation d'au moins une pente.

Selon l'invention, un réservoir destiné au stockage de carburant possède une enveloppe. Cette enveloppe s'étend en élévation d'un fond vers une paroi supérieure, une paroi latérale délimitant l'enveloppe latéralement entre le fond et la paroi supérieure.

De manière remarquable, le réservoir est pourvu d'au moins une paroi inclinée dans l'enveloppe. Chaque paroi inclinée s'étend alors entre la paroi latérale et le fond pour ménager au moins une pente dirigeant le carburant vers une zone prédéterminée du réservoir par gravité. La zone prédéterminée peut être une zone d'alimentation du type précédemment décrit.

L'enveloppe du réservoir délimitant un volume interne, la paroi inclinée partage ce volume interne du réservoir en un volume principal et un volume sous-pente qui sont destinés à contenir du carburant, le volume sous-pente étant délimité par ladite paroi inclinée ainsi que par la paroi latérale et ledit fond. Le réservoir est muni d'un système de transfert de carburant pour transférer du carburant du volume sous-pente vers le volume principal et du volume principal vers le volume sous-pente.

On entend par « paroi ménageant au moins une pente », une paroi pouvant comporter un ou plusieurs pans inclinés. Une paroi peut donc présenter une inclinaison selon plusieurs directions pour ménager plusieurs pentes.

On comprend qu'en présence d'une pluralité de parois, le volume interne est scindé en un volume principal et un volume sous-pente par paroi.

Dès lors, chaque paroi permet de ménager une pente, et un volume sous-pente exploitable pour stocker du carburant. A l'inverse, la réalisation de pentes à l'aide de mousses de l'état de la technique génère un volume sous-pente inexploitable.

Le système de transfert permet alors d'exploiter ce carburant présent sous les pentes.

Ainsi, durant un remplissage, on remplit le volume principal de carburant, le système de transfert remplissant chaque volume sous-pente à partir d'un volume principal.

Ensuite, le système de transfert permet de transférer le carburant stocké dans le volume sous-pente dans le volume principal.

L'invention exploite alors un volume non utilisé dans les solutions de l'état de la technique mettant par exemple en oeuvre des mousses, en conservant néanmoins les pentes mises en oeuvre. Le volume de carburant embarquable est donc augmenté de manière significative à iso encombrement par rapport à un système connu muni d'au moins une mousse et d'un réservoir.

De plus, le volume sous-pente présente l'avantage d'ajouter des possibilités d'amortissement au réservoir en cas de crash.

Ce volume sous-pente peut éventuellement aussi limiter les fuites de carburant selon certains cas de crash.

Le système de transfert inclut au moins une conduite d'alimentation pour transférer par gravité du carburant du volume principal vers le volume sous-pente, le système de transfert comprenant au moins un moyen actif pour transférer du carburant du volume sous-pente vers le volume principal.

Par exemple, le système de transfert inclut une conduite d'alimentation et un moyen actif par paroi inclinée.

Ce système de transfert est alors relativement simple et efficace. Le transfert de carburant du volume principal vers le volume sous-pente s'effectue par gravité. Par contre, le transfert de carburant du volume sous-pente vers le volume principal peut être forcé par un moyen actif pour garantir l'exploitation du carburant stocké.

Ce réservoir peut en outre présenter une ou plusieurs des caractéristiques additionnelles qui suivent.

Ainsi,la conduite d'alimentation traverse éventuellement la paroi inclinée pour mettre en communication le volume principal et un volume sous-pente.

La conduite d'alimentation peut être un simple orifice ménagé dans la paroi inclinée, ou encore un tube traversant cette paroi inclinée par exemple.

En outre, le moyen actif peut comporter une pompe débouchant sur le volume principal.

La pompe peut comporter un moyen d'aspiration agencé dans un volume sous-pente, et une conduite traversant la paroi inclinée.

Alternativement, ce moyen actif comporte un éjecteur, coopérant éventuellement avec des conduites d'acheminement de carburant.

Dans le cadre d'un réservoir d'aéronef alimentant au moins un moteur, le moyen actif peut éventuellement conduire un peu d'air dans le volume principal lors de changements d'assiette de l'aéronef.

Toutefois, le moyen actif n'alimente pas directement le moteur. L'air transféré par le moyen actif remonte alors à la surface du volume principal, et ne perturbe pas l'alimentation en carburant du moteur.

Par ailleurs, la conduite d'alimentation peut être selon une variante à l'aplomb du moyen actif. La conduite d'alimentation est agencée dans un plan haut pour tendre à remplir entièrement le volume sous-pente, alors que le moyen actif est agencé dans un plan bas pour tendre à vider entièrement le volume sous-pente.

Selon une autre variante, la conduite d'alimentation débouche dans le plan d'aspiration du moyen actif, voire sous ce plan.

Ce système de transfert peut inclure au moins un moyen de mise à l'air libre pour mettre à l'air libre le volume sous-pente. Par exemple, le réservoir comporte au moins un moyen de mise à l'air libre par volume sous-pente.

Lors du remplissage, l'air présent dans le volume sous-pente est chassé par le moyen de mise à libre.

Ce moyen de mise à l'air libre peut traverser la paroi inclinée et déboucher sur un espace du volume principal relié à l'air libre.

En outre, le réservoir peut comporter un système de jaugeage sous-pente du carburant contenu dans le volume sous-pente, et un système de jaugeage principal du carburant contenu dans le volume principal.

L'équipage peut alors connaître le volume total de carburant stocké au travers de l'affichage du volume de carburant présent dans les volumes sous pente et du volume de carburant présent dans le volume principal, ou encore de l'affichage de la somme du volume de carburant présent dans les volumes sous pente et du volume de carburant présent dans le volume principal.

Par ailleurs, lorsque le réservoir comporte au moins deux parois inclinées ménageant chacune un volume sous-pente, le réservoir peut comporter un moyen de communication pour faire communiquer entre eux lesdits volumes sous-pentes.

En outre, ce réservoir peut comporter au moins une paroi de séparation pour scinder un volume sous-pente en deux volumes. Dès lors, un volume sous-pente important peut être scindé en deux volumes sous-pente restreint.

Outre un réservoir, l'invention vise un aéronef comportant un tel réservoir.

Par ailleurs, l'invention vise aussi un procédé de stockage de carburant dans un tel réservoir. Au cours de ce procédé :
- on remplit le volume principal de carburant, chaque volume sous-pente étant rempli de carburant à partir du volume principal par le système de transfert,
- on puise le carburant dans le volume principal pour le consommer, et on transfère le carburant du volume sous-pente vers le volume principal via le système de transfert.

L'invention et ses avantages apparaîtront avec plus de détails dans le cadre de la description qui suit avec des exemples de réalisations donnés à titre illustratif en référence aux figures annexées qui représentent :
- la figure 1, un schéma présentant un réservoir selon l'invention,
- la figure 2, un schéma présentant un réservoir selon l'invention en trois dimensions,
- la figure 3, un schéma détaillant un système de transfert d'un réservoir selon l'invention,
- les figures 4 à 10, des schémas explicitant le fonctionnement de l'invention.

Les éléments présents dans plusieurs figures distinctes sont affectés d'une seule et même référence.

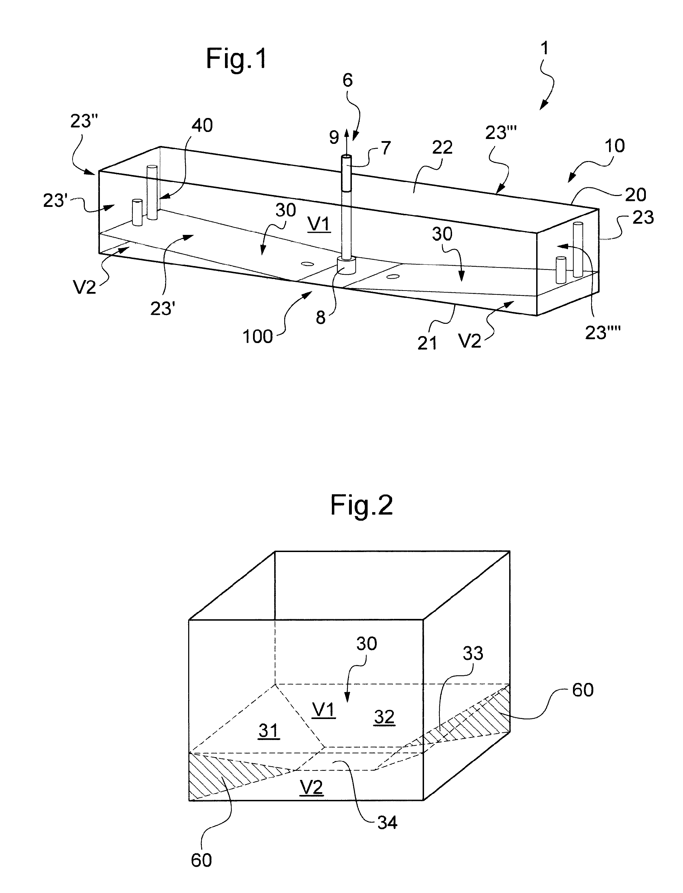

La figure 1 présente un véhicule 1 selon l'invention. Ce véhicule est par exemple un aéronef, tel qu'un aéronef muni d'une voilure tournante.

Cet aéronef 1 possède un système de stockage. Ce système de stockage peut notamment être un système pour stocker le carburant alimentant une installation motrice 9, ou un autre réservoir voire un autre groupe de réservoir.

Les autres organes de l'aéronef ne sont pas représentés pour ne pas alourdir la figure 1.

Le système de stockage est pourvu d'au moins un réservoir 10 agencé dans un compartiment du véhicule 1. Le réservoir 10 est alors muni d'une enveloppe 20 délimitant un volume interne de stockage.

Cette enveloppe 20 s'étend ainsi en élévation d'un fond 21 vers une paroi supérieure 22 qui sont séparés par une paroi latérale 23. Chaque paroi peut comporter une pluralité de facettes. Par exemple, la paroi latérale 23 représentée est munie de quatre facettes latérales en élévation 23', 23", 23"', 23"".

Par ailleurs, le réservoir 10 inclut une tuyauterie 6 pour alimenter une installation motrice 9, ou encore un autre réservoir. La tuyauterie 6 débouche alors sur une zone prédéterminée 100 de transfert de carburant, cette zone prédéterminée 100 pouvant être dénommée « zone d'alimentation ». Cette tuyauterie 6 peut comporter soit au moins un tuyau 7, soit selon l'exemple représenté au moins un tuyau 7 et une pompe de gavage 8.

Ce réservoir comporte de plus au moins une pente pour diriger le carburant vers la zone prédéterminée 100 de transfert de carburant.

Par conséquent, le réservoir 10 est pourvu d'au moins une paroi inclinée 30 fixée d'une part à la paroi latérale 23 et au fond 21. Chaque paroi permet de ménager au moins une pente dirigée vers la zone prédéterminée 100.

Dé plus, chaque paroi inclinée 30 permet de ménager un volume sous-pente V2 creux susceptible de contenir du carburant.

Dès lors, le volume interne du réservoir est scindé en un volume principal V1 incluant la zone prédéterminée 100, et en un volume sous-pente V2 par paroi. Par opposition à l'expression « volume sous-pente », le volume principal peut être dénommé « volume hors-pente » par exemple.

La figure 1 présente une réalisation munie de deux parois inclinées 30 qui ménagent chacune un volume sous-pente. Dans cette configuration, le réservoir peut comprendre un moyen de communication pour faire communiquer entre eux lesdits volumes sous-pentes. Un tel moyen de communication n'est pas représenté par commodité mais peut inclure au moins un tuyau, voire une pompe ou un éjecteur.

En référence à la figure 2, une paroi inclinée 30 peut comprendre une pluralité de pans inclinés 31, 32, 33, 34. Chaque pan permet de créer une pente selon une direction.

Dès lors, le réservoir 10 peut être équipé d'au moins une paroi de séparation 60. Les parois de séparation scindent alors le volume sous-pente V2 généré par les pans 31, 32, 33, 34 de la paroi inclinée 30 en une pluralité de volumes sous-pentes restreints.

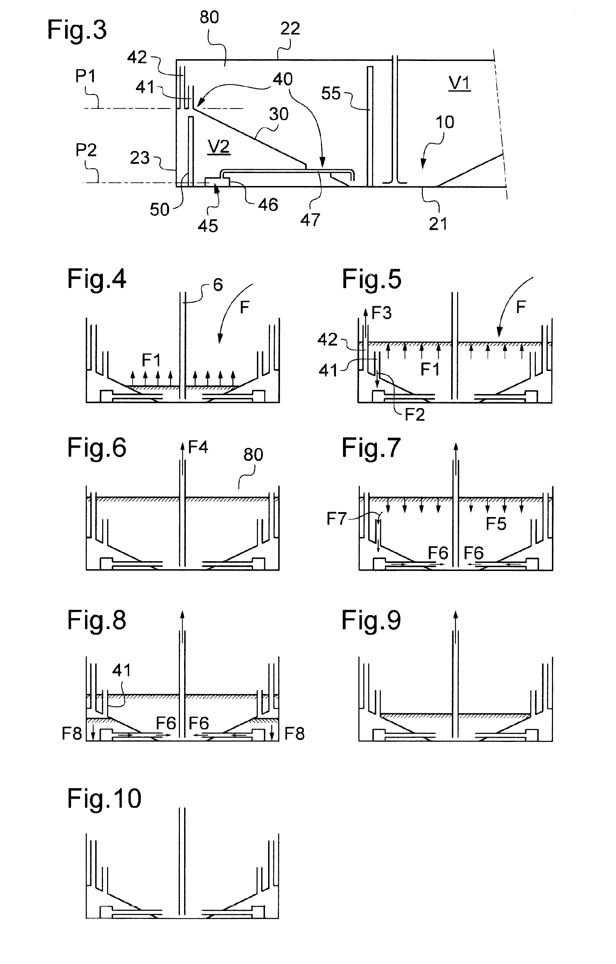

En référence à la figure 3 et indépendamment de la variante, le réservoir 10 est muni d'un système de transfert 40. Ce système de transfert 40 permet de transférer du carburant du volume sous-pente V2 vers le volume principal V1, et du volume principal V1 vers le volume sous-pente V2.

Ce système de transfert 40 inclut au moins une conduite d'alimentation 41. Chaque conduite d'alimentation 41 a pour fonction de transférer par gravité du carburant du volume principal V1 vers un volume sous-pente V2.

Par suite, le système de transfert 40 inclut par exemple une conduite d'alimentation 41 par volume sous-pente. Plusieurs conduites d'alimentation 41 peuvent aussi être prévues pour maximiser le débit de remplissage du volume sous-pente. Chaque conduite d'alimentation 41 peut ainsi comporter une tuyauterie traversant la paroi inclinée 30.

Lorsqu'un volume sous-pente est scindé en en une pluralité de volumes sous-pentes restreints, chaque volume sous-pente restreint est muni d'au moins une conduite d'alimentation.

Chaque conduite d'alimentation 41 autorise donc un transfert de fluide par gravité du volume principal V1 vers un volume sous-pente V2.

De plus, le système de transfert 40 inclut au moins un moyen actif 45 pour transférer du carburant du volume sous-pente V2 vers le volume principal V1. Chaque moyen actif 45 a pour fonction de transférer de manière active du carburant d'un volume sous-pente V2 vers le volume principal V1.

Par suite, le système de transfert 40 inclut par exemple un moyen actif 45 par volume sous-pente.

Lorsqu'un volume sous-pente est scindé en une pluralité de volumes sous-pentes restreints, chaque volume sous-pente restreint est muni d'un moyen actif 45.

Le moyen actif 45 représenté sur la figure 3 est pourvu d'une pompe 46 débouchant sur le volume sous-pente V2. Cette pompe 46 inclut un moyen d'aspiration apte à aspirer du carburant, et une conduite 47 débouchant sur le volume principal V1.

Le moyen actif peut à titre de variante comporter un éjecteur.

Selon l'exemple de la figure 3, au moins une pompe 46 ou au moins un éjecteur sont agencés dans chaque volume sous-pente. Toutefois, il est possible d'agencer la pompe ou l'éjecteur dans le volume principal V1.

Par exemple, une pompe 46 disposée dans le volume sous pente aspire du carburant dans au moins un volume sous pente V2 par au moins un tuyau, puis transfère ce carburant dans le volume principal V1.

Par ailleurs, la conduite d'alimentation est par exemple à l'aplomb du moyen actif selon la réalisation de la figure 3.

En effet, la conduite d'alimentation débouche sur un plan supérieur P1 alors que le moyen actif puise du carburant d'un volume sous-pente dans un plan inférieur P2. Le plan supérieur P1 est alors à l'aplomb du plan inférieur P2, au sol notamment.

En outre, le système de transfert 40 inclut par exemple au moins un moyen de mise à l'air libre 42 pour relier le volume sous-pente V2 à l'air libre.

Ce moyen de mise à l'air libre 42 peut inclure au moins une tuyauterie de mise à l'air libre traversant la paroi inclinée 30 pour déboucher à l'air libre. Par exemple, la tuyauterie de mise à l'air libre débouche sur un espace 80 du volume principal V1, cet espace étant relié à l'air libre par des moyens usuels.

Par ailleurs, le réservoir 10 comporte éventuellement un dispositif pour déterminer le volume de carburant stocké. Ce dispositif inclut un système de jaugeage sous-pente 50 du carburant contenu dans le volume sous-pente V2, et un système de jaugeage principal 55 du carburant contenu dans le volume principal V1.

Par exemple, le système de jaugeage sous-pente 50 inclut par exemple un moyen de jaugeage par volume sous-pente, telle qu'une canne de jaugeage ou tout autre moyen connu par exemple.

Lorsqu'un volume sous-pente est scindé en une pluralité de volumes sous-pentes restreints, chaque volume sous-pente restreint est muni d'un moyen de jaugeage.

Les figures 4 à 10 explicitent un procédé de stockage de carburant mettant en oeuvre un tel réservoir.

En référence à la figure 4, un opérateur remplit le réservoir 10 en déversant du carburant dans le volume principal V1 conformément aux flèches F.

Le niveau de carburant monte alors dans ce volume principal V1 selon les flèches F1.

En référence à la figure 5, chaque volume sous-pente est rempli de carburant à partir du volume principal par le système de transfert à partir d'un niveau seuil.

Plus précisément, à partir d'un niveau seuil déterminé par la hauteur des conduites d'alimentation 41, le carburant présent dans le volume principal V1 traverse les conduites d'alimentation 41 selon la flèche F2.

Ainsi, le niveau de carburant dans les volumes sous-pente augmente.

De plus, l'air présent dans les volumes sous-pentes est expulsé des volumes sous-pente par le moyen de mise à l'air libre 42 selon la flèche F3.

En fonction du débit de remplissage du volume principal et du débit de remplissage des volumes sous-pentes, le niveau de carburant peut continuer à monter en parallèle dans le volume principal.

A l'issue du remplissage et en référence à la figure 6, le carburant stocké peut être transféré en dehors du réservoir. Par exemple, le carburant stocké est transféré vers une installation motrice à partir du volume principal selon la flèche F4.

En référence à la figure 7, parallèlement à cette consommation, le système de transfert transfère le carburant des volumes sous pentes vers le volume principal du réservoir selon les flèches F6.

Tant que la conduite d'alimentation 41 est immergée dans le carburant, du carburant retourne dans le volume sous-pente à partir du volume principal selon la flèche F7.

En référence à la figure 8, lorsque la conduite d'alimentation 41 émerge du niveau de carburant dans le volume principal, le niveau de carburant baisse dans les volumes sous-pentes selon les flèches F8.

En référence à la figure 9, lorsque les volumes sous-pentes sont vides, du carburant reste présent dans le volume principal. Ce carburant restant est dirigé vers la zone prédéterminée par les pentes ménagées par la ou les parois inclinées.

Le système de transfert transférant du fluide entre le volume principal et les volumes sous-pentes peut alors s'arrêter.

En référence à la figure 10, le carburant peut être consommé à l'issue d'un vol dans le cadre d'un aéronef.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Réservoir (10) destiné au stockage de carburant, ce réservoir (10) ayant une enveloppe (20) s'étendant en élévation d'un fond (21) vers une paroi supérieure (22), une paroi latérale (23) délimitant l'enveloppe (20) entre ledit fond (21) et ladite paroi supérieure (22), ledit réservoir (10) est pourvu d'au moins une paroi inclinée (30) qui s'étend entre la paroi latérale et ledit fond pour ménager au moins une pente (30) dirigeant ledit carburant vers une zone prédéterminée (100) du réservoir (10) par gravité, ladite paroi inclinée (30) partageant un volume interne du réservoir en un volume principal (V1) et un volume sous-pente (V2) qui sont destinés à contenir du carburant, ledit volume sous-pente (V2) étant délimité par ladite paroi inclinée (30) ainsi que la paroi latérale (23) et ledit fond (21)
**caractérisé en ce que**, ledit réservoir (10) étant muni d'un système de transfert (40) de carburant pour transférer du carburant du volume sous-pente (v2) vers le volume principal (V1) et du volume principal (V1) vers le volume sous-pente (V2), le système de transfert (40) inclue au moins une conduite d'alimentation (41) pour transférer par gravité du carburant du volume principal (V1) vers le volume sous-pente (V2), ledit système de transfert (40) comprenant au moins un moyen actif (45) pour transférer du carburant du volume sous-pente (V2) vers le volume principal (V1).

2. Réservoir selon la revendication 1,
**caractérisé en ce que** ladite conduite d'alimentation (41) traverse ladite paroi inclinée (30).

3. Réservoir selon l'une quelconque des revendications 1 à 2,
**caractérisé en ce que** ledit moyen actif (45) comporte une pompe (46) débouchant sur ledit volume principal (V1).

4. Réservoir selon l'une quelconque des revendications 1 à 3,
**caractérisé en ce que** ledit moyen actif comporte un éjecteur.

5. Réservoir selon l'une quelconque des revendications 1 à 4,
**caractérisé en ce que** ladite conduite d'alimentation (41) est à l'aplomb du moyen actif.

6. Réservoir selon l'une quelconque des revendications 1 à 5,
**caractérisé en ce que** le système de transfert (40) inclut au moins un moyen de mise à l'air libre (42) pour mettre à l'air libre le volume sous-pente (V2).

7. Réservoir selon la revendication 6,
**caractérisé en ce que** ledit moyen de mise à l'air libre (42) traverse ladite paroi inclinée (30) et débouche sur un espace du volume principal (V1) relié à l'air libre.

8. Réservoir selon l'une quelconque des revendications 1 à 7,
**caractérisé en ce que** ce réservoir (10) comporte un système de jaugeage sous-pente (50) du carburant contenu dans le volume sous-pente (V2), et un système de jaugeage principal (55) du carburant contenu dans le volume principal (V1).

9. Réservoir selon l'une quelconque des revendications 1 à 8,
**caractérisé en ce que** ce réservoir (10) comportant au moins deux parois inclinées (30) ménageant chacune un volume sous-pente (V2), ledit réservoir (10) comporte un moyen de communication pour faire communiquer entre eux lesdits volumes sous-pentes.

10. Réservoir selon l'une quelconque des revendications 1 à 9,
**caractérisé en ce que** ce réservoir (10) comporte au moins une paroi de séparation (60) pour scinder un volume sous-pente (V2) en deux volumes.

11. Aéronef (1),
**caractérisé en ce que** cet aéronef (1) comporte un réservoir (10) selon l'une quelconque des revendications 1 à 10.

12. Procédé de stockage de carburant dans un réservoir selon l'une quelconque des revendications 1 à 10, au cours duquel :
- on remplit le volume principal de carburant, chaque volume sous-pente étant rempli de carburant à partir du volume principal par le système de transfert,
- on puise le carburant dans le volume principal pour le consommer, et on transfère le carburant du volume sous-pente vers le volume principal via le système de transfert.

## Patentansprüche

1. Treibstofftank (10) mit einem Gehäuse (20), das sich von einem Boden (21) bis zu einer oberen Wandung (22) erstreckt, wobei eine Seitenwand (23) das Gehäuse (20) zwischen dem Boden (21) und der oberen Wandung (22) begrenzt, wobei der Tank (10) mit mindestens einer geneigten Wandung (30) versehen ist, die sich zwischen der Seitenwand und dem Boden erstreckt, um mindestens eine Neigung (30) zu erzeugen, das den Treibstoff in einem vorbestimmten Bereich (100) des Tanks (10) durch die Schwerkraft lenkt, wobei die geneigte Wandung (30) ein Innenvolumen des Tanks in ein Hauptvolumen (V1) und ein Volumen unterhalb der Neigung (V2) unterteilt, die dazu bestimmt sind, Treibstoff zu enthalten, wobei das Volumen unterhalb der Neigung (V2) eingegrenzt wird durch die geneigte Wandung (30) sowie die Seitenwand (23) und den Boden (21),
**dadurch gekennzeichnet, dass** der Tank (10) mit einem System (40) zur Weiterleitung von Treibstoff versehen ist, um Treibstoff aus dem Volumen (V2) unterhalb der Neigung zum Hauptvolumen (V1) weiterzuleiten und vom Hauptvolumen (V1) zum Volumen (V2) unterhalb der Neigung, wobei das Weiterleitungssystem (40) mindestens eine Zufuhrleitung (41) für eine Weiterleitung von Treibstoff durch die Schwerkraft vom Hauptvolumen (V1) zum Volumen (V2) unterhalb der Neigung aufweist, wobei das Weiterleitungssystem (40) mindestens ein aktives Mittel (45) zur Weiterleitung von Treibstoff aus dem Volumen (V2) unterhalb der Neigung zum Hauptvolumen (V1) aufweist.

2. Tank nach Anspruch 1,
**dadurch gekennzeichnet, dass** die Versorgungsleitung (41) die geneigte Wandung (30) durchquert.

3. Tank nach einem der Ansprüche 1 bis 2,
**dadurch gekennzeichnet, dass** das aktive Mittel (45) eine Pumpe (46) aufweist, die in dem Hauptvolumen (V1) mündet.

4. Tank nach einem der Ansprüche 1 bis 3,
**dadurch gekennzeichnet, dass** das aktive Mittel einen Auswerfer aufweist.

5. Tank nach einem der Ansprüche 1 bis 4,
**dadurch gekennzeichnet, dass** die Versorgungsleitung (41) senkrecht über dem aktiven Mittel angeordnet ist.

6. Tank nach einem der Ansprüche 1 bis 5,
**dadurch gekennzeichnet, dass** das Verlagerungssystem (40) mindestens ein Belüftungsmittel (42) aufweist, um das Volumen (V2) unterhalb der Neigung zu belüften.

7. Tank nach Anspruch 6,
**dadurch gekennzeichnet, dass** das Belüftungsmittel (42) die geneigte Wandung (30) durchquert und in einem Luftraum des Hauptvolumens (V1) mündet.

8. Tank nach einem der Ansprüche 1 bis 7,
**dadurch gekennzeichnet, dass** der Tank (10) ein Treibstofffüllstandsmesssystem (50) unterhalb der Neigung für den Treibstoff, der in dem Volumen (2) unterhalb der Neigung enthalten ist, aufweist, und ein Hauptfüllstandsmesssystem (55) zum Messen des Füllstands des Treibstoffs, der in dem Hauptvolumen (V1) enthalten ist.

9. Tank nach einem der Ansprüche 1 bis 8,
**dadurch gekennzeichnet, dass** der Tank (10) mindestens zwei geneigte Wandungen (30) aufweist, die jeweils ein Volumen (V2) unterhalb der Neigung bilden, wobei der Tank (10) ein Verbindungsmittel aufweist, um die beiden Volumen unterhalb der Neigung miteinander zu verbinden.

10. Tank nach einem der Ansprüche 1 bis 9,
**dadurch gekennzeichnet, dass** der Tank (10) mindestens eine Trennwand (60) aufweist, um ein Volumen (V2) unterhalb der Neigung in zwei Volumen zu unterteilen.

11. Luftfahrzeug (1),
**dadurch gekennzeichnet, dass** das Luftfahrzeug (1) einen Tank (10) nach einem der Ansprüche 1 bis 10 aufweist.

12. Verfahren zum Lagern von Treibstoff in einem Tank nach einem der Ansprüche 1 bis 10, bei dem:
- man das Hauptvolumen mit Treibstoff füllt, wobei jedes Volumen unterhalb der Neigung ausgehend von dem Hauptvolumen durch das Verlagerungssystem mit Treibstoff gefüllt wird,
- man den Treibstoff dem Hauptvolumen entnimmt, um ihn zu verbrauchen, und man den Treibstoff des Volumens unterhalb der Neigung über das Verlagerungssystem zum Hauptvolumen verlagert.

## Claims

1. A tank (10) intended for storing fuel, this tank (10) having a casing (20) extending in elevation from a bottom (21) to an upper wall (22), a lateral wall (23) defining the casing (20) between said bottom (21) and said upper wall (22), said tank (10) is provided with at least one inclined wall (30) which extends between the lateral wall and said bottom to provide at least one slope (30) which directs said fuel towards a predetermined zone (100) of the tank (10) by gravity, said inclined wall (30) dividing an internal volume of the tank into a main volume (V1) and an under-slope volume (V2) which are intended to contain fuel, said under-slope volume (V2) being defined by said inclined wall (30) and also the lateral wall (23) and said bottom (21),
**characterised in that**, said tank (10) being provided with a fuel transfer system (40) for transferring fuel from the under-slope volume (V2) to the main volume (V1) and from the main volume (V1) to the under-slope volume (V2), the transfer system (40) includes at least one supply pipe (41) for transferring fuel by gravity from the main volume (V1) to the under-slope volume (V2), said transfer system (40) comprising at least one active means (45) for transferring fuel from the under-slope volume (V2) to the main volume (V1).

2. A tank according to Claim 1,
**characterised in that** said supply pipe (41) passes through said inclined wall (30).

3. A tank according to any one of Claims 1 to 2,
**characterised in that** said active means (45) comprises a pump (46) which opens into said main volume (VI).

4. A tank according to any one of Claims 1 to 3,
**characterised in that** said active means comprises an ejector.

5. A tank according to any one of Claims I to 4,
**characterised in that** said supply pipe (41) is directly above the active means.

6. A tank according to any one of Claims 1 to 5,
**characterised in that** the transfer system (40) includes at least one venting means (42) for venting the under-slope volume (V2) to the open air.

7. A tank according to Claim 6,
**characterised in that** said venting means (42) to the open air passes through said inclined wall (30) and opens into a space of the main volume (V1) which is connected to the open air.

8. A tank according to any one of Claims 1 to 7,
**characterised in that** this tank (10) comprises an under-slope gauging system (50) for the fuel contained in the under-slope volume (V2), and a main gauging system (55) for the fuel contained in the main volume (V1).

9. A tank according to any one of Claims 1 to 8,
**characterised in that**, this tank (10) comprising at least two inclined walls (30) each forming an under-slope volume (V2), said tank (10) comprises a communication means to connect said under-slope volumes to each other.

10. A tank according to any one of Claims 1 to 9,
**characterised in that** this tank (10) comprises at least one separating wall (60) for splitting an under-slope volume (V2) into two volumes.

11. An aircraft (1),
**characterised in that** this aircraft (1) comprises a tank (10) according to any one of Claims 1 to 10.

12. A method of storing fuel in a tank according to any one of Claims 1 to 10, during which:
- the main volume is filled with fuel, each under-slope volume being filled with fuel from the main volume by the transfer system,
- the fuel is drawn from the main volume in order to consume it, and the fuel is transferred from the under-slope volume to the main volume via the transfer system.
